# EUROPÄISCHE PATENTSCHRIFT

(11) **EP 0 726 583 B1**
(45) Veröffentlichungstag und Bekanntmachung des Hinweises auf die Patenterteilung: **05.09.2001**
(21) Anmeldenummer: 96101559.1
(22) Anmeldetag: 03.02.1996
(51) Int. Cl.: H01F 7/06, F16K 31/06, B29C 65/08

(54) **Verfahren zur Herstellung eines Elektromagneten**
Method for making an electromagnet
Procédé de fabrication d'un électroaimant

(30) Priorität: 08.02.1995 DE 19504100
(43) Veröffentlichungstag der Anmeldung: 14.08.1996
(73) Patentinhaber: Schultz, Wolfgang E., Dipl.-Ing., D-87700 Memmingen (DE)
(72) Erfinder: Kleinert, Dieter, Dip.-Ing., D-87700 Memmingen (DE); Egg, Max, D-87746 Erkheim (DE); Schmeisser, Achim, Dipl-Ing., D-88457 Kirchdorf-Iller (DE)
(74) Vertreter: Pfister, Helmut, Dipl.-Ing.

(56) Entgegenhaltungen:
- EP-A- 0 247 304
- EP-A- 0 559 591
- DE-A- 3 844 413
- FR-A- 2 359 348
- US-A- 4 829 275
- US-A- 4 830 333

## Beschreibung

Die Erfindung betrifft ein Verfahren zur Herstellung eines Elektromagneten mit einer Betätigungsvorrichtung, wobei das durch eine Spule bewirkte Magnetfeld auf einen Anker einwirkt und den Anker in einer ersten Stellung gegen die Kraft einer Rückholfeder hält, wobei die Rückholfeder den Anker bei nicht beaufschlagter Spule in einer zweiten Stellung hält und der Anker auf die Betätigungsvorrichtung einwirkt, wobei sowohl der Elektromagnet wie auch die Betätigungsvorrichtung je in einem Gehäuse eingebaut werden und die beiden Gehäuse miteinander verbunden werden.

Der Anker wirkt hierbei z.B. auf eine Ankerstange als Betätigungsvorrichtung. Ein typisches Anwendungsfeld der Elektromagneten ist in Verbindung mit einem Ventil das Steuern von hydraulischen Anlagen. Hierbei ist es bekannt, das Gehäuse des Magneten mit dem Gehäuse der Betätigungsvorrichtung (z.B. dem Ventil) mit Schrauben zu verbinden. Des weiteren ist es auch bekannt, die Gehäuse miteinander zu verkleben oder mit Stahlklammern oder mit Schnappelementen miteinander zu verbinden.

Das Gehäuse wird hierbei z.B. aus mehreren Teilen aufgebaut. Auch ist es möglich, das Gehäuse und die Funktion der Betätigungsvorrichtung bzw. des Magneten in irgendeiner geeigneten Form zusammenzufassen. Das Gehäuse kann beispielsweise die Führung von Elementen z.B. des Ankers übernehmen oder aber Abstützung oder Widerlager bilden.

Insbesondere das Verbinden der Gehäuse bzw. das Verbinden der Gehäuseteile zu einem Gehäuse muß mit großer Genauigkeit erfolgen. Würden z.B. in ein undichtes Gehäuse Flüssigkeiten eindringen können, so würde dies zum Ausfall des Elektromagneten führen. Auch muß sichergestellt sein, daß keine Hydraulikflüssigkeit aus dem Gehäuse austreten kann.

Die oben beschriebenen Verbindungstechniken haben unter anderem die Nachteile, daß die Verklebungen z.B. altern und ihre Festigkeit verlieren. Hohe Kräfte bei der Druckbeaufschlagung durch das Hydraulikmedium, insbesondere wenn der Elektromagnet mit der Betätigungsvorrichtung hohen Temperaturänderungen ausgesetzt ist, kann zu Lockerungen oder Zerstörungen der Verbindungen führen und damit zu Unsicherheiten im Betrieb und zum frühzeitigen Ausfall.

Auch ist beobachtet worden, daß das Schwinden der Kunststoffe zu Lockerungen der Schraubverbindungen führen kann und ebenfalls die einwandfreie Funktionsfähigkeit des Elektromagneten beeinträchtigen kann.

In der FR-A-2 359 348 ist ein Elektromagnetventil beschrieben, dessen Gehäuse mittels Ultraschall miteinander verschweißt sind. Zu diesem Zweck weist das eine Gehäuse Vorsprünge auf, die mit einem Sitz am anderen Gehäuse zusammenwirken. Freiräume an der Verbindungsstelle dienen dazu, das geschmolzene thermoplastische Material aufzunehmen, um eine absolut dichte Verbindung zwischen beiden Teilen zu erhalten.

Nach der EP-A-0 559 591 werden zwei Gehäuseteile mittels eines zusätzlichen Verbindungselementes miteinander ultraschallverschweißt, wodurch auf die in den Gehäusen angeordneten empfindlichen Elemente keine der hochfrequenten Schwingungen übertragen werden. Die Verbindung beider Teile miteinander ist hier ebenfalls absolut dicht.

In beiden Fällen müssen jedoch die Gehäuseteile vor dem Zusammenfügen exakt gearbeitet sein, um anschließend bei dem fertigen Gehäuse geringe Maßtoleranzen zu erreichen. Eben diese hochgenaue Fertigung der einzelnen Elemente ist aufwendig.

Die Erfindung hat sich zur Aufgabe gemacht, ein Verfahren zur Herstellung eines Elektromagneten, wie eingangs beschrieben, derart weiterzuentwickeln, daß es möglich sein soll, ein absolut dichtes Gehäuse bzw. Gehäuseverbindungen zwischen dem Gehäuse der Betätigungsvorrichtung und des Elektromagneten zu schaffen, wobei gleichzeitig während des Herstellungsverfahrens die auftretenden Längentoleranzen des Gehäuses ausgeglichen werden sollen.

Zur Lösung dieser Aufgabe geht die Erfindung aus von einem Verfahren wie eingangs beschrieben und schlägt vor, daß das Gehäuse des Elektromagneten und das Gehäuse der Betätigungsvorrichtung in einer Längentoleranzausgleichsvorrichtung angeordnet sind und unter gleichzeitiger Längenkontrolle durch Ultraschall dicht und maßgenau miteinander verschweißt und auf ein bestimmtes Gesamtgehäusemaß geformt werden.

Die Längentoleranzausgleichsvorrichtung besteht z.B. aus einer Form, in der der Elektromagnet mit der Betätigungsvorrichtung einschließlich der Gehäuse eingelegt und während des Ultraschallschweißens auf ein bestimmtes Maß geformt wird. Durch den Schweißvorgang im Ultraschall fließt der Kunststoff bzw. das Material der Gehäuse ineinander, wobei zum einen eine dichte Verbindung entsteht, und zum anderen, die exakte Länge des Gehäuses bestimmt werden kann. Dies erreicht die Erfindung, indem die Längerentoleranzausgleichsvorrichtung eben dann auf das Gehäuse einwirkt, wenn der Werkstoff plastisch ist. Hierbei ist es von Vorteil, wenn als Gehäusematerial ein thermoplastischer Werkstoff verwendet wird.

Das Verfahren ist insbesondere dann von Vorteil, wenn das Gehäuse aus mehreren Gehäuseteilen besteht und die Gehäuseteile gleichzeitig miteinander ultraschallverschweißt werden. Dies ist z.B. dann der Fall, wenn ein Gehäuse, z.B. das Gehäuse des Elektromagneten oder das Gehäuse der Betätigungsvorrichtung, aus mehreren Gehäuseteilen besteht und dieses aus mehreren Gehäuseteilen bestehende Gehäuse mit dem anderen Gehäuse verschweißt werden soll. Dadurch erreicht man, daß mit einem Arbeitsschritt, nämlich dem Verschweißen in einer Längentoleranzausgleichsvorrichtung, drei oder noch mehr Schritte gleichzeitig abgearbeitet werden. Es wird ein aus mehreren Gehäuseteilen bestehendes Gehäuse geschaffen, wobei dieses Gehäuse gleichzeitig mit einem anderen Gehäuse, das beispeilsweise bereits fertig ist oder auch aus Gehäuseteilen zusammengeschweißt wird, verschweißt wird, wobei das dadurch entstehende Gesamtgehäuse maßgenau gearbeitet ist.

Bei den bekannten Elektromagneten waren Flansche oder dergleichen an den Gehäusen vorgesehen, an die das Gehäuse der Betätigungsvorrichtung anlag. Für eine hohe Maßgenauigkeit war eine entsprechende aufwendige Bearbeitung dieser Nahtstellen notwendig. Der Erfindung liegt des weiteren die Aufgabe zugrunde, einen Elektromagneten mit Betätigungsvorrichtung so auszugestalten, daß eine Verbindung der beiden Gehäuse mit dem erfindungsgemäßen, oben vorgestellten Verfahren auf einfache Art und Weise erfolgt.

Zur Lösung dieser Aufgabe geht die Erfindung aus von einem Elektromagnet mit Betätigungsvorrichtung und schlägt vor, daß das Gehäuse an der Nahtstelle zwischen der Betätigungsvorrichtung und dem Elektromagneten einen Absatz und einen Vorsprung aufweist, die mit einem Vorsprung und einem Absatz des an der Nahtstelle anliegenden anderen Gehäuses zusammenwirken.

Durch diese erfindungsgemäße Ausgestaltung des Elektromagneten wird während des Ultraschallverschweißens das Durchdringen von Materialen der verschiedenen Gehäuseteile bzw. der verschiedenen Gehäuse gefördert. Es ist günstig, wenn die Fläche der sich berührenden Gehäuseteile oder Gehäuse an der Nahtstelle möglichst groß ist, damit eine dichte Verbindung entsteht. Hierbei wird z.B. auch darauf geachtet, daß die Absätze nicht absolut spielfrei in die Vorsprünge des anliegenden Gehäuses eingreifen, sondern daß zwischen diesen beiden Elementen ein gewisser Spalt verbleibt. In diesen Spalt kann dann das Schmelzgut, das während des Ultraschallschweißens entsteht, einfließen. Der Spalt wirkt somit auch gleichzeitig als Längenpuffer, der das Material aufnehmen kann, wenn das Gehäuse in der Längentoleranzausgleichsvorrichtung noch auf Maß gedrückt werden muß.

Es ist von Vorteil, wenn das Gehäuse aus Gehäuseteilen besteht und das Gehäuseteil einen Absatz und einen Vorsprung aufweist, die mit einem Vorsprung und einem Absatz eines benachbarten Gehäuseteiles zusammenwirkt. Durch eine solche Ausgestaltung der Gehäuseteile wird erreicht, daß die Kontaktfläche zwischen den beiden Gehäuseteilen möglichst groß wird, um bei dem Ultraschallschweißen ein möglichst großflächiges Durchdringen zu erreichen. Auch hier ist vorgesehen, daß die Vorsprünge bzw. Absätze Ausnehmungen aufweisen, in die das Schmelzgut abfließen kann.

Es ist günstig, wenn das Gehäuseteil einen Dichtungsring hält und der Dichtungsring den Ankerraum gegen die Betätigungsvorrichtung abdichtet. Der Dichtungsring bewirkt, daß das Medium nicht in das Innere des Elektromagneten eindringen kann.

In einer Ausgestaltungsform der Erfindung wird vorgeschlagen, daß als Betätigungsvorrichtung ein Ventil vorgesehen ist. Es ist z.B. auch möglich, daß als Betätigungsvorrichtung eine Ankerstange vorgesehen ist, die in einem entsprechenden Gehäuse geführt ist.

Ferner wird vorgeschlagen, daß das Ventil in einer seitlichen Bohrung eine Handvorrichtung aufweist, die auf den Anker einwirkt und das Ventil steuert. Mit der Handvorrichtung wird das Ventil gesteuert, wenn z.B. der Elektromagnet die Steuerung des Ventiles nicht mehr übernehmen kann.

Es ist von Vorteil, wenn der Anker gegen die Kraft einer an einen Dichtkörper angreifenden Feder auf diesen Dichtkörper einwirkt und entsprechend einem Strömungskanal verschließt oder freigibt. Wird z.B. die Spule mit Strom beaufschlagt, so wird der Anker gegen die Kraft der Rückholfeder über den Luftspalt angezogen und der Dichtkörper von einer angreifenden Feder von dem Strömungskanal weggedrückt, wodurch diese dann freigegeben ist. Im stromlosen Fall verschließt der Dichtkörper den Strömungskanal, da die Rückholfeder, die auf den Anker wirkt, diesen gegen den Dichtkörper schiebt und der Dichtkörper den Strömungskanal verschließt.

Hierbei ist es von Vorteil, wenn die Wirkung der Feder und der Rückholfeder entgegengerichtet ist.

Es ist von Vorteil, wenn das Ventil neben einer Zu- und einer Ableitung eine Entlüftungsleitung aufweist. Die Entlüftungs-bzw. auch Entlastungsleitung sorgt dafür, daß der Druck in der Ableitung des Ventiles sofort abgebaut wird.

In der Zeichnung ist die Erfindung schematisch dargestellt. Es zeigen:
- Fig. 1: einen lotrechten Schnitt durch einen erfindungsgemäßen Elektromagneten mit Betätigungsvorrichtung,
- Fig. 2: einen lotrechten Schnitt durch die Betätigungsvorrichtung des erfindungsgemäßen Elektromagneten,
- Fig. 3: einen lotrechten Schnitt durch einen Zwischenring eines erfindungsgemäßen Elektromagneten.

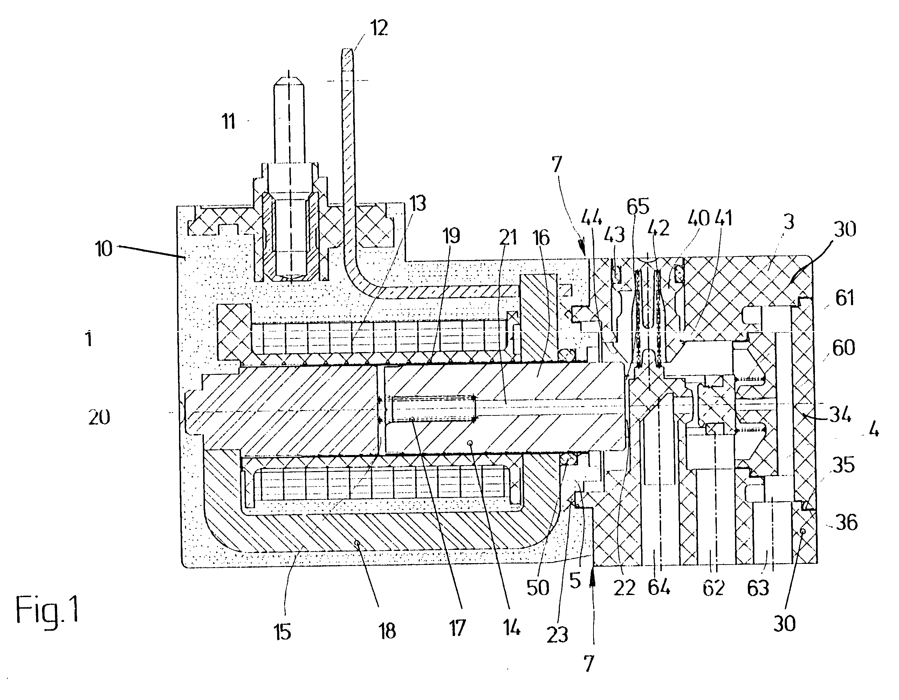

In Fig. 1 ist mit 1 ein Elektromagnet gekennzeichnet. Der Elektromagnet 1 weist ein Gehäuse 10 auf, in dem sich die Spule 13 befindet. Die Spule 13 ist mit nicht weiter dargestellten Kabeln mit den elektrischen Kontakten 11 verbunden. Mit 12 ist ein Erdungskontakt gekennzeichnet, der z.B. mit Gehäuseteilen im Inneren des Elektromagneten verbunden ist.

Die Spule 13 umfaßt den Ankerraum 16. Der Ankerraum 16 wird im wesentlichen gebildet durch die Hülse 19, auf die die Spule 13 bzw. der Spulenkörper der Spule 13 aufgeschoben ist. Der Ankerraum 16 nimmt den Anker 14 auf, der auf der Innenfläche der Hülse 19 gleitet.

Der Anker 14 wirkt auf eine Betätigungsvorrichtung 3. Der Anker 14 ist z.B. als zylindrischer Körper ausgeführt. An seinem der Betätigungsvorrichtung abgewandten Ende stützt sich der Anker 14 mit der Rückholfeder 17 auf dem Kern 20 ab. Der Anker 14 weist hierzu eine Achsbohrung 21 auf, die an ihrem dem Kern anliegenden Ende eine Abstufung aufweist, an der sich die Rückholfeder 17 im Anker 14 abstützt.

Zwischen dem Anker 14 und dem Kern 20 befindet sich der Luftspalt 15. Dieser Luftspalt 15 wird geschlossen, wenn der Anker 14 angezogen wird. Dies ist der Fall, wenn die Spule 13 mit Strom beaufschlagt wird, wobei dann ein magnetisches Feld entsteht, das mit Hilfe des Kernes 20 sowie des Bügels 18 und dem Anker 14 geführt wird, um an dem Arbeitsluftspalt 15 eine möglichst hohe magnetische Kraft zu erzeugen, die den Anker 14 gegen die Kraft der Rückholfeder 17 an den Kern 20 zu ziehen.

Die zurückgezogene Stellung (die hier nicht gezeigt ist) des Ankers 14 bildet somit eine Stellung des Elektromagneten, die andere Stellung ist in Fig. 1 gezeigt und wird durch die Rückholfeder 17 bestimmt, die den Anker 14 im stromlosen Zustand nach rechts schiebt.

Zwischen dem Elektromagneten 1 und der Betätigungsvorrichtung 3 befindet sich ein Zwischenring 5. Der Zwischenring 5 trägt auf seiner Innenseite einen Dichtungsring 50. Der Zwischenring 5 weist Absätze 51 auf, um optimal mit den Gehäusen 10,30 verschweißt werden zu können. Der Zwischenring 5, z.B. als Gehäuseteil, wird gleichzeitig mit den beiden angrenzenden Gehäusen 10,30 verschweißt.

Durch die Achsbohrung 21 ist ein Druckausgleich zwischen dem Luftspalt 15 und der Betätigungsvorrichtung 3 möglich, wodurch ein schnelles Schalten des Ankers 14 möglich ist.

Die Betätigungsvorrichtung 3 ist in diesem Ausführungsbeispiel als Ventil 4 ausgeführt. Die Betätigungsvorrichtung 3 bzw. das Ventil 4 besteht aus einem Gehäuse 30. Das Gehäuse 30 ist an der Nahtstelle 7 mit dem Gehäuse 10 des Elektromagneten 1 verbunden. Das Verbinden des Gehäuses 30 mit dem Gehäuse 10 erfolgt beispielsweise durch Ultraschallschweißen. Der Zwischenring 5 befindet sich ebenfalls an der Nahtstelle 7.

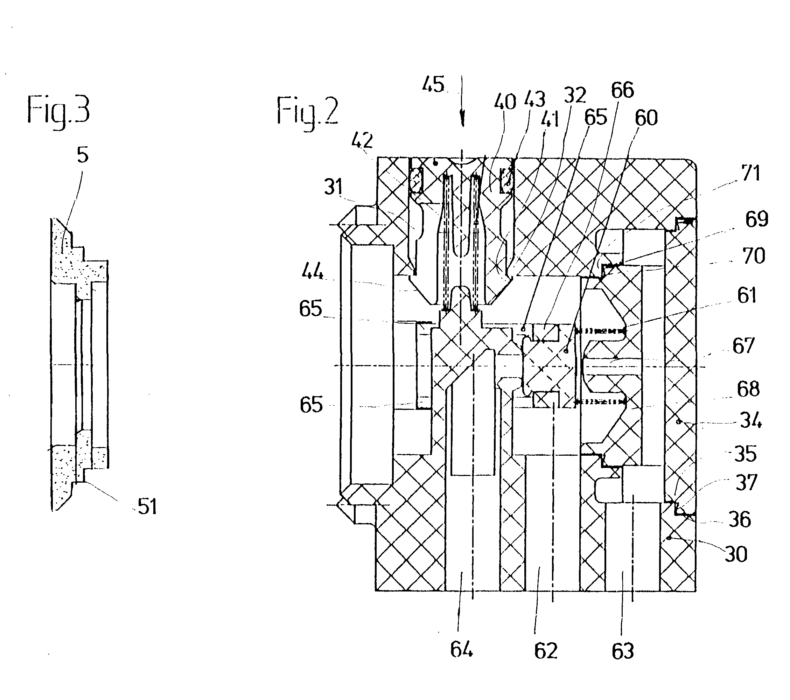

Das Ventil 4 weist insgesamt drei verschiedene Zuleitungen 62,63,64 auf, wobei die Zu- und Ableitungen mit 62 und 63 und die Entlüftungsleitung mit 64 bezeichnet sind. Der Anker 14 wirkt über seine Stirnfläche 22 auf die Füßchen 65 einer Platte 66, die den Dichtungskörper 60 trägt. Auf der anderen Seite des Dichtungskörpers 60 ist eine Feder 61 vorgesehen, die bewirkt, daß die Ventilöffnung 67 geöffnet wird, wenn der Anker 14 den Dichtungskörper 60 nicht auf diese drückt. Dies ist insbesondere in Fig. 2 dargestellt.

Die Ventilöffnung 67 ist hierzu z.B. mit der Zu- bzw. Ableitung 63 verbunden. Die Ventilöffung 67 befindet sich z.B. in einer Platte 68 die in das Gehäuse 30 eingesetzt ist. Die Platte 68 wird hierbei durch die vom dem Deckel 34 verschlossenen Öffnung eingeführt. Die Platte 68 befindet sich zwischen den Kanälen 62 und 63 und ist ebenfalls mit dem Gehäuse 30 ultraschallverschweißt.

Des weiteren weist das Ventil eine Handbetätigungsvorrichtung 40 auf, die bei einem Ausfall des Elektromagneten 1 sicherstellen soll, daß das Ventil 4 noch gesteuert werden kann. Hierzu weist die Handbetätigungsvorrichtung 40 auf seiner Innenseite eine schräge Steuerfläche 44 auf, die mit der Handbetätigungsvorrichtung 40 in Pfeilrichtung 45 in das Gehäuse 30 gedrückt wird, auf die Stirnfläche 22 des Ankers 14 wirkt und diesen gegen die Kraft der Rückholfeder 17 zurückschiebt. Dadurch drückt die Feder 61 den Dichtungskörper 60 von der Ventilöffnung 67 und gibt somit die Verbindung zwischen den Zu-und Ableitungen 62,63 frei. Wird nun die Handbetätigungsvorrichtung 40 losgelassen, so drückt die Feder 42 diese gegen die Pfeilrichtung 45 nach außen und die schräge Steuerfläche 44 kommt nicht mehr in Kontakt mit der Stirnfläche 22. Die Federkraft der Rückholfeder 17 überwiegt hierbei die Federkraft der Feder 61 und die Ventilöffnung 67 wird durch den Dichtungskörper 60 wieder verschlossen.

Die Handbetätigungsvorrichtung 40 weist einen Dichtungsring 43 auf, der die Handbetätigungsvorrichtung 40 abdichtet. Die Handbetätigungsvorrichtung 40 weist Nasen 41 auf. Diese Nasen 41 sind unter anderem an der schrägen Steuerfläche 44 vorgesehen. Diese Nase 41 bewirkt, daß die Handbedienungsvorrichtung 40 nicht aus der Bohrung 31 des Gehäuses 30 gegen die Pfeilrichtung 45 herausgleiten kann. Hierzu weist die Bohrung 31 auf der Innenseite einen nach innen vorstehenden Vorsatz 32 auf, der mit der Nase 41 zusammenwirkt.

Durch das erfindungsgemäße Verfahren der beiden Gehäuse 10 und 30 ist vorgesehen, daß die Gehäuse 10 und 30 an der Nahtstelle 7 ultraschallverschweißt werden. Für eine effektive und feste Verbindung dieser beiden Gehäuse 10 und 30 sind an dem Gehäuseteil 10 und 30 entsprechende Vorkehrungen getroffen, damit das Ultraschallverschweißen optimal erfolgen kann.

In Fig. 2 ist hierzu ausgeführt, daß der Anschluß des Gehäuses 30 an das Gehäuse 10 des Elektromagneten (an der Nahtstelle 7) zahnartig ausgebildet ist. Durch eine solche Ausbildung wird die Oberfläche erhöht und eine größere Kontaktfläche mit dem zu verschweißenden Gehäuse 10 gebildet.

An der Nahtstelle 7 werden nicht nur die beiden Gehäuse 10 und 30 miteinander verbunden. Zwischen diesen beiden Gehäusen befindet sich auch der Zwischenring 5, der Abstufungen 51 aufweist (Fig. 3), die mit dem zahnartigen Anschluß 33 des Gehäuses 30 zusammenwirken.

In Fig. 1 ist gezeigt, daß auch das Gehäuse 10 im Bereich der Nahtstelle 7 eine Spitze 23 bildet, um mit den zahnartigen Anschluß 33 optimal zusammenzuwirken.

Der erfindungsgemäße Gedanke beschränkt sich nicht nur auf das Zusammenschweißen zweier Gehäuse 10 und 30 mittels Ultraschall unter gleichzeitiger Längenkontrolle, sondern auch auf das Zusammenschweißen des Gehäuses, das z.B. aus mehreren Gehäuseteilen besteht. Dies ist beispielsweise in Fig. 1 angedeutet. Die Betätigungsvorrichtung 3 besteht aus einem Gehäuse 30, das an seiner Stirnseite einen Deckel 34 aufweist. Um den Deckel 34 optimal mit dem Gehäuse 30 zu verschweißen, weist der Deckelrand 35 eine Abstufung auf, die mit einer entsprechenden Abstufung in dem Gehäuserand 36 zusammenwirkt, damit das Ultraschallschweißen an einer großen Kontaktfläche erfolgt. Hierbei ist darauf geachtet worden, daß die beiden Absetzungen im Deckelrand 35 und im Gehäuserand 36 nicht vollständig gleich sind, sondern daß eine zusätzliche Ausnehmung 37 vorgesehen ist, in die der durch das Ultraschallschweißen geschmolzene Werkstoff abfließen kann. Auch die Platte 68 weist Absätze und Vorsprünge 69 auf, die mit entsprechenden Vorsätzen und Absätzen 70 im Inneren des Gehäuses 30 zusammenwirken. Auch sind hier wieder Ausnehmungen 71 vorgesehen, in die der geschmolzene Werkstoff abfließen kann. Dies ist insbesondere dann von Vorteil, wenn das Gehäuse gleichzeitig an mehreren Gehäuseteilen (Deckel 34 bzw. Platte 68) ultralschallverschweißt wird unter gleichzeitiger Längenkontrolle.

## Patentansprüche

1. Verfahren zur Herstellung eines Elektromagneten (1) mit einer Betätigungsvorrichtung (3), wobei das durch eine Spule (13) bewirkte Magnetfeld auf einen Anker (14) einwirkt und den Anker (14) in einer ersten Stellung gegen die Kraft einer Rückholfeder (17) hält, wobei die Rückholfeder (17) den Anker (14) bei nicht beaufschlagter Spule (13) in einer zweiten Stellung hält, und der Anker (14) auf die Betätigungsvorrichtung (3) einwirkt, wobei sowohl der Elektromagnet (1) wie auch die Betätigungsvorrichtung (3) je in einem Gehäuse eingebaut werden und die beiden Gehäuse miteinander verbunden werden, **dadurch gekennzeichnet, daß** das Gehäuse (10) des Elektromagneten (1) und das Gehäuse (30) der Betätigungsvorrichtung (3) in einer Längentoleranzausgleichsvorrichtung unter gleichzeitiger Längenkontrolle durch Ultraschall dicht und maßgenau miteinander verschweißt und auf ein bestimmtes Gesamtgehäusemaß geformt werden.

2. Verfahren zur Herstellung eines Elektromagneten (1) mit einer Betätigungsvorrichtung (3), wobei das durch eine Spule (13) bewirkte Magnetfeld auf einen Anker (14) einwirkt und den Anker (14) in einer ersten Stellung gegen die Kraft einer Rückholfeder (17) hält und die Rückholfeder (17) den Anker (14) bei nicht beaufschlagter Spule (13) in einer zweiten Stellung hält, wobei der Elektromagnet (1) und die Betätigungsvorrichtung (3) je in einem Gehäuse (10, 30) eingebaut sind, **dadurch gekennzeichnet, daß** das Gehäuse (10) des Elektromagneten (1) und/oder das Gehäuse (30) der Betätigungsvorrichtung (3) aus mehreren Gehäuststeilen (10, 30, 34, 68) besteht, die zum Verschweißen miteinander in einer Längentoleranzausgleichsvorrichtung unter gleichzeitiger Längenkontrolle durch Ultraschall dicht und maßgenau verschweißt und auf ein bestimmtes Gesamtgehäusemaß geformt werden.

3. Verfahren zur Herstellung eines Elektromagneten nach Anspruch 2 **dadurch gekennzeichnet, daß** die Gehäuseteile (30, 34, 68) gleichzeitig miteinander ultraschallverschweißt werden.

4. Verfahren zur Herstellung eines Elektromagneten nach Anspruch 1 oder 2, **dadurch gekennzeichnet, daß** zwischen dem aus einem oder mehreren Teilen bestehenden Gehäuse (10) des Elektromagneten (1) und dem aus einem oder mehreren Teilen bestehenden Gehäuse (30) der Betätigungsvorrichtung (3) ein Zwischenteil (5) vorgesehen ist, das einen Dichtungsring (50) hält, wobei der Dichtungsring (50) den Ankerraum (16) gegen die Betätigungsvorrichtung (3) abdichtet und dieses Zwischenteil (5), das Gehäuse (10) des Elektromagneten (1) und das Gehäuse (30) der Betätigungsvorrichtung (3) in der Längenausleichsvorrichtung unter gleichzeitiger Längenkontrolle durch Ultraschall dicht und maßgenau miteinander verschweißt werden.

## Claims

1. Process for the production of a solenoid (1) with a operating device (3), in which the magnetic field created by a coil (13) acts on an armature (14) and holds the armature (14) in a first position against the force of a restoring spring (17), in which the restoring spring (17) holds the armature (14), when the coil (13) is not impinged, in a second position, and the armature (14) acts on the operating device (3), in which the solenoid (1) as well as the operating device (3) are each built into an housing and the two housings are connected to each other, **characterised in that** the housing (10) of the solenoid (1) and the housing (30) of the operating device (3) are welded to each other tightly and accurately to dimension in a length allowance compensation device, while simultaneously the length is controlled by ultrasound, and formed to a certain total housing measurement.

2. Process for the production of a solenoid (1) with a operating device (3), in which the magnetic field created by a coil (13) acts on an armature (14) and holds the armature (14) in a first position against the force of a restoring spring (17) and the restoring spring (17) holds the armature (14) in second position, while the coil (13) is not impinged, in which the solenoid (1) and the operating device (3) are each built into an housing (10, 30), **characterised in that** the housing (10) of the electromagnet (1) and/or the housing (30) of the operating device (3) consists of several housing parts (10, 30, 34, 68), which are welded to each other tightly and accurately to dimension in a length allowance compensation device, while simultaneously being length controlled by ultrasound, and shaped to a certain total housing measurement.

3. Process for the production of a solenoid according to claim 2, **characterised in that** the housing parts (30, 34, 68) are welded to each other simultaneously by ultrasound.

4. Process for the production of a solenoid according to claim 1 or 2, **characterised in that** an intermediate part (5) is provided between the housing (10) of the solenoid (1) consisting of one or more parts, and the housing (30) of the operating device (3) consisting of one or more parts, which holds a sealing ring (50), in which the sealing ring (50) seals the armature space (16) against the operating device (3) and this intermediate part (5), the housing (10) of the solenoid (1) and the housing (30) of the operating device (3) are welded to each other in the length allowance compensation device tightly and accurately to dimension by ultrasound, while simultaneously being length controlled.

## Revendications

1. Procédé de fabrication d'un aimant électrique (1) composé d'un mécanisme de déclenchement (3) et d'une bobine (13) qui, lorsqu'elle est alimentée, crée un champ agissant sur un noyau mobile (14) le maintenant ainsi dans une première position contre la force d'un ressort (17) qui pousse le noyau (14) dans une deuxième position dans laquelle il vient en butée contre le mécanisme de déclenchement (3) dès l'arrêt de l'alimentation de la bobine (13), l'aimant électrique (1) ainsi que le mécanisme de déclenchement (3) sont placés chacun dans un boîtier et ces deux boîtiers sont assemblés, **caractérisé en ce que** le boîtier (10) de l'aimant électrique (1) et le boîtier (30) du mécanisme de déclenchement (3) sont soudés l'un à l'autre par ultrasons de façon étanche et précise, en utilisant un dispositif d'ajustement des dimensions permettant de les contrôler en continu afin d'obtenir la longueur définie et précise du boîtier.

2. Procédé de fabrication d'un aimant électrique (1) composé d'un mécanisme de déclenchement (3) et d'une bobine (13) qui, lorsqu'elle est alimentée, crée un champ agissant sur un noyau mobile (14) le maintenant ainsi dans une première position contre la force d'un ressort (17) qui pousse le noyau (14) dans une deuxième position dans laquelle il vient en butée contre le mécanisme de déclenchement (3) dès l'arrêt de l'alimentation de la bobine (13), l'aimant électrique (1) ainsi que le mécanisme de déclenchement (3) étant montés chacun dans un boîtier (10, 30), **caractérisé en ce que** le boîtier (10) de l'aimant électrique (1) et/ou le boîtier (30) du mécanisme de déclenchement (3) sont constitués de plusieurs pièces (10, 30, 34, 68) qui sont soudées l'une à l'autre par ultrasons de façon étanche et précise, en utilisant un dispositif d'ajustement des dimensions permettant de les contrôler en continu afin d'obtenir la longueur définie et précise du boîtier.

3. Procédé de fabrication d'un aimant électrique selon la revendication 2 **caractérisé en ce que** les pièces du boîtier (30, 34, 68) sont soudées les unes aux autres simultanément par ultrasons.

4. Procédé de fabrication d'un aimant électrique selon la revendication 1 ou 2 **caractérisé en ce qu**'une pièce intermédiaire (5) est située entre les boîtiers (10, 30) constitués d'une ou plusieurs pièces, de l'aimant électrique (1) et du mécanisme de déclenchement (3) et, en ce qu'elle maintient un joint torique (50) qui rend l'espace (16) autour du noyau étanche, sans communication possible avec le mécanisme de déclenchement (3), et permet de le souder au boîtier (10) de l'aimant électrique (1) et au boîtier (30) du mécanisme de déclenchement (3) par ultrasons de façon étanche et précise, en utilisant un dispositif d'ajustement des dimensions permettant de les contrôler en continu.
